# EUROPÄISCHE PATENTANMELDUNG

(11) **EP 2 436 577 A2**
(43) Veröffentlichungstag der Anmeldung: **04.04.2012**
(21) Anmeldenummer: 11182845.5
(22) Anmeldetag: 27.09.2011
(51) Int. Cl.: B62D 15/02

(54) **Verfahren und Vorrichtung zum Erkennen von freien Parkplätzen**

(30) Priorität: 30.09.2010 DE 102010047162
(71) Anmelder: Valeo Schalter und Sensoren GmbH, 74321 Bietigheim-Bissingen (DE)
(72) Erfinder: Charpentier, Adrien, 70180 Stuttgart (DE)

(57) **Zusammenfassung**

Die Erfindung betrifft ein Verfahren zum Erkennen von freien Parkplätzen (7) durch Analyse von Bilddaten, welche in einem Fahrzeug (1) von mindestens einer Bilderfassungsvorrichtung (12.1, 12.2) aufgenommen werden, mit den Schritten: Erfassen und Speichern von Eingabebildern einer seitlichen Umgebung des Fahrzeugs (1) während einer Bewegung des Fahrzeugs (1), Ermitteln und Verfolgen von Referenzpunkten durch Analysieren der erfassten Eingabebilder, Rekonstruktion eines 3D-Modells der seitlichen Umgebung des Fahrzeugs (1) in Form einer 3D-Punktwolke unter Verwendung der Referenzpunkte, und Analysieren der 3D-Punktwolke, um einen freien Parkplatz (7) zu erkennen.

Um eine besonders einfache und schnelle Auswahl eines geeigneten freien Parkplatzen zu ermöglichen, wird die 3D-Punktwolke der seitlichen Umgebung des Fahrzeugs (1) als Ausgabebild ausgegeben, wobei ein maßhaltiges 3D-Modell des Fahrzeugs (1) an einer Position einer Abbildung des erkannten freien Parkplatzes (7) in das Ausgabebild eingefügt wird.

## Beschreibung

Die Erfindung betrifft ein Verfahren zum Erkennen von freien Parkplätzen der im Oberbegriff des Anspruchs 1 genannten Art, eine zugehörige Vorrichtung zum Erkennen von freien Parkplätzen sowie ein Datenverarbeitungsprogramm und ein Computerprogrammprodukt zur Durchführung des Verfahrens.

In der Offenlegungsschrift DE 10 2009 009 815 A1 werden beispielsweise ein Verfahren und eine Vorrichtung zum Erkennen von Parklücken durch eine Analyse von Bilddaten mindestens eines Kamerasystems eines Kraftfahrzeugs beschrieben. Das beschriebene Verfahren umfasst folgende Schritte: Akquirieren von Bilddaten der seitlichen Umgebung des Kraftfahrzeugs durch das Kamerasystems während der Fahrt des Kraftfahrzeugs, Rekonstruieren einer 3D-Punktwolke charakteristischer Punkte der seitlichen Umgebung des Kraftfahrzeugs aus den Bilddaten mittels eines Motion-Stereo-Verfahrens, Vorsegmentierung der Punkte der 3D-Punktwolke als Funktion der Höhe über der Fahrbahnebene in eine vorgegebene Anzahl von Klassen, wobei eine erste Klasse Punkte auf der Fahrbahnebene umfasst einschließlich solcher, die in einem Bereich oberhalb und unterhalb der Fahrbahnebene einer vorgegebenen ersten Höhe liegen, Projizieren der vorsegmentierten Punkte der ersten Klasse in eine Draufsicht auf die Fahrbahnebene, und Suchen nach Fahrbahnmarkierungen in den auf die Fahrbahnebene projizierten Punkte der ersten Klasse.

In der Offenlegungsschrift DE 10 2009 012 435 A1 werden eine Vorrichtung und ein Verfahren zum monokularen Motion-Stereobasierten Detektieren von freien Parkplätzen beschrieben. Die beschriebene Vorrichtung erfasst Bildsequenzen mit einer einzigen Rückblickfischaugenkamera, rekonstruiert den Fahrzeugrückblick dreidimensional durch Verwendung von Punktkorrespondenzen und gewinnt metrische Informationen anhand einer bekannten Kamerahöhe wieder, um die Position von benachbarten Fahrzeugen zu schätzen und dadurch die freien Parkplätze zu detektieren. Durch die Verwendung einer De-Rotation-basierter Merkmalsauswahl und einer 3D-Strukturmosaikzusammensetzung wird das Problem einer Verschlechterung der 3D-Struktur in der Nähe des Epipols gelöst, so dass keine von den Straßenbedingungen abhängige Wegmessung (Odometrie) erforderlich ist.

Aufgabe der Erfindung ist es, ein Verfahren zum Erkennen von freien Parkplätzen der im Oberbegriff des Anspruchs 1 genannten Art, eine korrespondierende Vorrichtung zum Erkennen von freien Parkplätzen der im Oberbegriff des Anspruchs 9 genannten Art dahingehend weiterzuentwickeln, dass eine besonders einfache und schnelle Auswahl eines geeigneten freien Parkplatzen ermöglicht wird, sowie ein Datenverarbeitungsprogramm und ein Computerprogrammprodukt zur Durchführung des Verfahrens zum Erkennen von freien Parkplätzen anzugeben.

Diese Aufgabe wird erfindungsgemäß durch ein Verfahren zum Erkennen von freien Parkplätzen mit den Merkmalen des Anspruchs 1 sowie durch eine Vorrichtung zum Erkennen von freien Parkplätzen mit den Merkmalen des Anspruchs 9 sowie durch ein Datenverarbeitungsprogramm mit den Merkmalen des Anspruchs 14 und ein Computerprogrammprodukt mit den Merkmalen des Anspruchs 15 gelöst. Weitere die Ausführungsformen der Erfindung in vorteilhafter Weise ausgestaltende Merkmale enthalten die Unteransprüche.

Der mit der Erfindung erzielte Vorteil besteht darin, dass die erzeugte 3D-Punktewolke der seitlichen Umgebung des Fahrzeugs als Ausgabebild ausgegeben wird, wobei ein maßhaltiges 3D-Modell des Fahrzeugs an einer Position einer Abbildung des erkannten freien Parkplatzes in das Ausgabebild eingefügt wird. Dies ermöglicht eine intuitive Erkennung, ob das Fahrzeug in einen erkannten freien Parkplatz passt oder nicht. Dadurch kann die Auswahl eines freien Parkplatzes für einen Einparkvorgang in vorteilhafter Weise vereinfacht und beschleunigt werden. Ausführungsformen des erfindungsgemäßen Verfahrens erkennen einen freien Parkplatz durch Analyse von Bilddaten, welche in einem Fahrzeug von mindestens einer Bilderfassungsvorrichtung aufgenommen werden. Zu diesem Zweck werden Eingabebildern einer seitlichen Umgebung des Fahrzeugs während einer Bewegung des Fahrzeugs erfasst und gespeichert. Durch Analysieren der erfassten Eingabebilder werden Referenzpunkte in den erfassten Eingabebildern ermittelt und verfolgt. Unter Verwendung der Referenzpunkte wird ein 3D-Modell der seitlichen Umgebung des Fahrzeugs in Form einer 3D-Punktwolke rekonstruiert, welche analysiert wird, um einen freien Parkplatz zu erkennen. Erfindungsgemäß wird die 3D-Punktwolke der seitlichen Umgebung des Fahrzeugs als Ausgabebild ausgegeben, wobei ein maßhaltiges 3D-Modell des Fahrzeugs an einer Position einer Abbildung des erkannten freien Parkplatzes in das Ausgabebild eingefügt wird.

Eine erfindungsgemäße Vorrichtung zum Erkennen von freien Parkplätzen umfasst mindestens eine Bilderfassungsvorrichtung zur Aufnahme von Bilddaten und eine Auswerte- und Steuereinheit, welche während der Bewegung des Fahrzeugs über die mindestens eine Bilderfassungsvorrichtung Eingabebildern einer seitlichen Umgebung des Fahrzeugs erfasst und speichert, wobei die Auswerte- und Steuereinheit durch Analysieren der erfassten Eingabebilder Referenzpunkte ermittelt und verfolgt und unter Verwendung der Referenzpunkte ein 3D-Modell der seitlichen Umgebung des Fahrzeugs in Form einer 3D-Punktwolke rekonstruiert, und wobei die Auswerte- und Steuereinheit zur Erkennung eines freien Parkplatzes die 3D-Punktwolke analysiert. Erfindungsgemäß gibt die Auswerte- und Steuereinheit die 3D-Punktwolke der seitlichen Umgebung des Fahrzeugs als Ausgabebild über eine optische Anzeigeeinheit aus und fügt ein maßhaltiges 3D-Modell des Fahrzeugs an einer Position einer Abbildung des erkannten freien Parkplatzes in das Ausgabebild ein.

Ausführungsformen der vorliegenden Erfindung bzw. einzelne beschriebene Komponenten können als Schaltung, Vorrichtung, Verfahren, Datenverarbeitungsprogramm mit Programmcodemitteln und/oder als Computerprogrammprodukt realisiert werden. Entsprechend kann die vorliegende Erfindung vollständig als Hardware und/oder als Software und/oder als Kombination aus Hardware- und/oder Softwarekomponenten ausgeführt werden. Zudem kann die vorliegende Erfindung als Computerprogrammprodukt auf einem computernutzbaren Speichermedium mit computerlesbarem Programmcode ausgeführt werden, wobei verschiedene computerlesbare Speichermedien wie Festplatten, CD-ROMs, optische oder magnetische Speicherelemente usw. benutzt werden können. Das Computerprogrammprodukt kann beispielsweise auf einem Prozessor einer elektronischen Auswerte- und Steuereinheit abgearbeitet werden.

Das Datenverarbeitungsprogramm mit Programmcodemitteln kann zur Ausführung des Verfahrens zum Erkennen von freien Parkplätzen durch eine elektronische Auswerte- und Steuereinheit mit mindestens einem Prozessor abgearbeitet werden.

In vorteilhafter Ausgestaltung des erfindungsgemäßen Verfahrens werden Texturen aus den erfassten Eingabebildern in das Ausgabebild eingefügt. Dadurch kann die Wiedererkennung der erkannten Parklücke durch den Fahrer in vorteilhafter Weise verbessert werden. Die eingefügten Texturen umfassen beispielsweise mindestens ein benachbart zum freien Parkplatz geparktes Fahrzeug und/oder eine Oberfläche des freien Parkplatzes und/oder mindestens eine Begrenzungslinie des erkannten freien Parkplatzes.

In weiterer vorteilhafter Ausgestaltung des erfindungsgemäßen Verfahrens werden die Eingabebilder mit korrespondierenden Positionsinformationen gespeichert, aus welchen eine relative Positionsinformation ermittelt und zur Analyse der Eingabebilder verwendet wird. Dadurch kann die Analyse der Eingabebilder in vorteilhafter Weise schneller durchgeführt werden und Rechenzeit eingespart werden. Die Positionsinformationen können beispielsweise von Fahrzeugsensoren und/oder von einem Ortungssystem im Fahrzeug zur Verfügung gestellt werden.

In weiterer vorteilhafter Ausgestaltung des erfindungsgemäßen Verfahrens kann der im Ausgabebild dargestellte Blickwinkel der seitlichen Umgebung des Fahrzeugs beliebig verändert werden. Dadurch ist ein Benutzer in vorteilhafter Weise in der Lage, eine gewünschte Perspektive der seitlichen Umgebung des Fahrzeugs auszuwählen.

In weiterer vorteilhafter Ausgestaltung des erfindungsgemäßen Verfahrens wird basierend auf der 3D-Punktwolke der seitlichen Umgebung des Fahrzeugs eine Einparkstrategie ermittelt und ausgegeben, wenn ein freier Parkplatz erkannt wird. Des Weiteren kann basierend auf der ermittelten Einparkstrategie ein Wegplan zum Einparken des Fahrzeugs ermittelt und ausgegeben werden. Zudem können basierend auf dem ermittelten Wegplan Steuersignale für Fahrzeugsysteme erzeugt werden, um einen automatischen Einparkvorgang in den erkannten Parkplatz auszuführen.

In vorteilhafter Ausgestaltung der erfindungsgemäßen Vorrichtung fügt die Auswerte- und Steuereinheit Texturen aus den erfassten Eingabebildern in das Ausgabebild ein, wobei die eingefügten Texturen mindestens ein benachbart zum freien Parkplatz geparktes Fahrzeug und/oder eine Oberfläche des freien Parkplatzes und/oder mindestens eine Begrenzungslinie des erkannten freien Parkplatzes umfassen.

In weiterer vorteilhafter Ausgestaltung der erfindungsgemäßen Vorrichtung speichert die Auswerte- und Steuereinheit Eingabebilder mit korrespondierenden Positionsinformationen, welche mindestens eine Sensorvorrichtung erfasst und zur Verfügung stellt, wobei die Auswerte- und Steuereinheit aus den Positionsinformationen eine relative Positionsinformation im Bezug auf korrespondierende Eingabebilder ermittelt und zur Analyse der Eingabebilder verwendet.

In weiterer vorteilhafter Ausgestaltung der erfindungsgemäßen Vorrichtung kann der im Ausgabebild dargestellte Blickwinkel der seitlichen Umgebung des Fahrzeugs durch eine manuelle Eingabe über eine Bedieneinheit beliebig vom Benutzer verändert werden.

In weiterer vorteilhafter Ausgestaltung der erfindungsgemäßen Vorrichtung ermittelt die Auswerte- und Steuereinheit bei einem erkannten freien Parkplatz basierend auf der 3D-Punktwolke der seitlichen Umgebung des Fahrzeugs eine Einparkstrategie und gibt diese an die Anzeigeeinheit und/oder an ein Einparkhilfesystem aus. Basierend auf der ermittelten Einparkstrategie ermittelt das Einparkhilfesystem einen Wegplan zum Einparken des Fahrzeugs und erzeugt basierend auf dem ermittelten Wegplan Steuersignale für Fahrzeugsysteme, um einen automatischen Einparkvorgang auszuführen, durch welchen das Fahrzeug in den erkannten Parkplatz eingeparkt wird. Die Fahrzeugsysteme umfassen beispielsweise ein aktives Lenksystem und/oder ein aktives Bremssystem und/oder eine Motorsteuerung

Nachfolgend wird ein Ausführungsbeispiel der Erfindung anhand einer zeichnerischen Darstellung näher erläutert.

In der Darstellung zeigt:
- Fig. 1: eine schematische Darstellung eines Straßenabschnitts mit einem Fahrzeug, das ein Ausführungsbeispiel einer erfindungsgemäßen Vorrichtung zum Erkennen von freien Parkplätzen umfasst.
- Fig. 2: ein Flussdiagramm eines Ausführungsbeispiels eines erfindungsgemäßen Verfahrens zum Erkennen von freien Parkplätzen.
- Fig. 3: eine Darstellung eines ersten Ausgabebildes einer 3D-Punktwolke einer seitlichen Fahrzeugumgebung unter einem ersten Blickwinkel.
- Fig. 4: eine Darstellung eines zweiten Ausgabebildes einer 3D-Punktwolke der seitlichen Fahrzeugumgebung unter einem zweiten Blickwinkel.

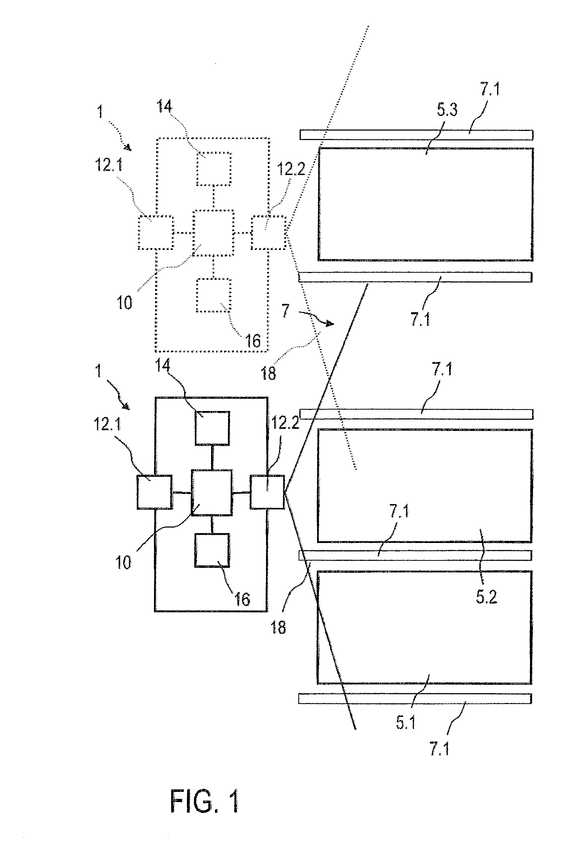

Wie aus Fig. 1 ersichtlich ist, umfasst ein Ausführungsbeispiel einer Vorrichtung zum Erkennen von freien Parkplätzen 7 eine Auswerte- und Steuereinheit 10, zwei Bilderfassungsvorrichtungen 12.1, 12.2, welche jeweils einer Seite des Fahrzeugs 1 zugeordnet sind, eine optische Anzeigeeinheit 14 und eine Bedieneinheit 16, die manuelle Eingabemittel und/oder Spracheingabemittel aufweist, um eine Bedienung der erfindungsgemäßen Vorrichtung zum Erkennen von freien Parkplätzen 7 zu ermöglichen. Wie aus Fig. 1 weiter ersichtlich ist, erfasst eine erste Bilderfassungsvorrichtung 12.1 eine linke seitliche Umgebung des Fahrzeugs 1 und eine zweite Bilderfassungsvorrichtung 12.2 erfasst eine rechte seitliche Umgebung des Fahrzeugs 1. Im dargestellten Ausführungsbeispiel ist die zweite Bilderfassungsvorrichtung 12.2 aktiviert und erfasst die rechte Fahrzeugumgebung im Bereich eines korrespondierenden Bilderfassungsbereichs 18. Die Aktivierung einer der Bilderfassungsvorrichtungen 12.1, 12.2 kann beispielsweise mit einer Blinkerbetätigung gekoppelt werden, durch welche bestimmt wird, auf welcher Fahrzeugseite ein freier Parkplatz gesucht wird. Alternativ zu den beiden links und rechts am Fahrzeug 1 angeordneten Bilderfassungsvorrichtungen 12.1, 12.2 kann auch eine im vorderen und/oder hinteren Fahrzeugbereich angeordnete Bilderfassungsvorrichtung verwendet werden, welche einen Erfassungsbereich von 180° aufweist.

Der dargestellte Straßenabschnitt zeigt mehrere Parkplätze, von denen drei jeweils mit einem Fahrzeug 5.1, 5.2, 5.3 belegt sind, wobei zwischen einem zweiten und dritten Fahrzeug 5.2, 5.3 ein freier Parkplatz 7 vorhanden ist. Die einzelnen Parkplätze werden durch zugehörige Markierungen 7.1 seitlich begrenzt.

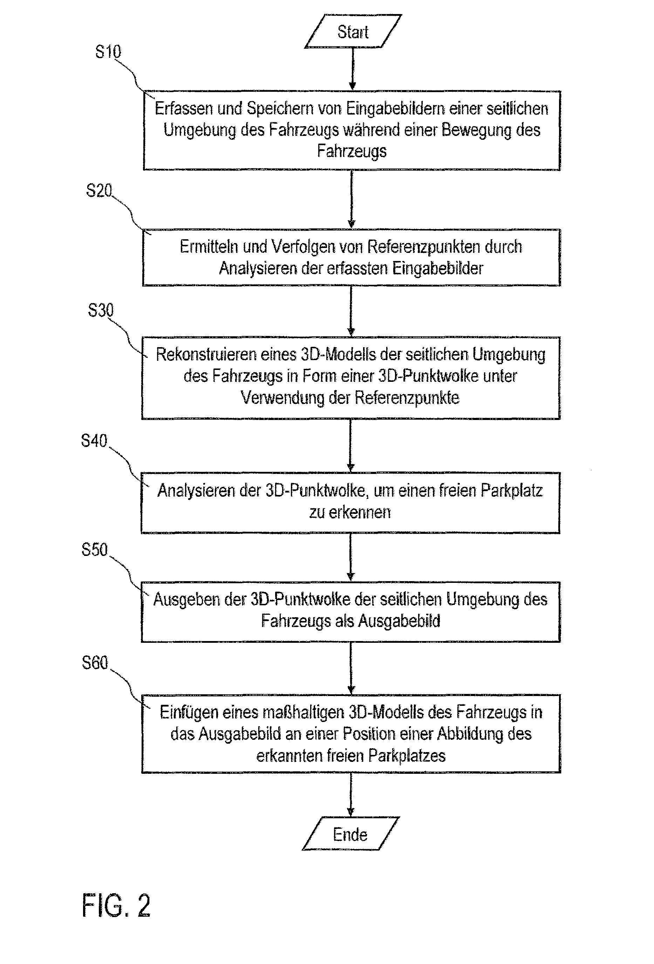

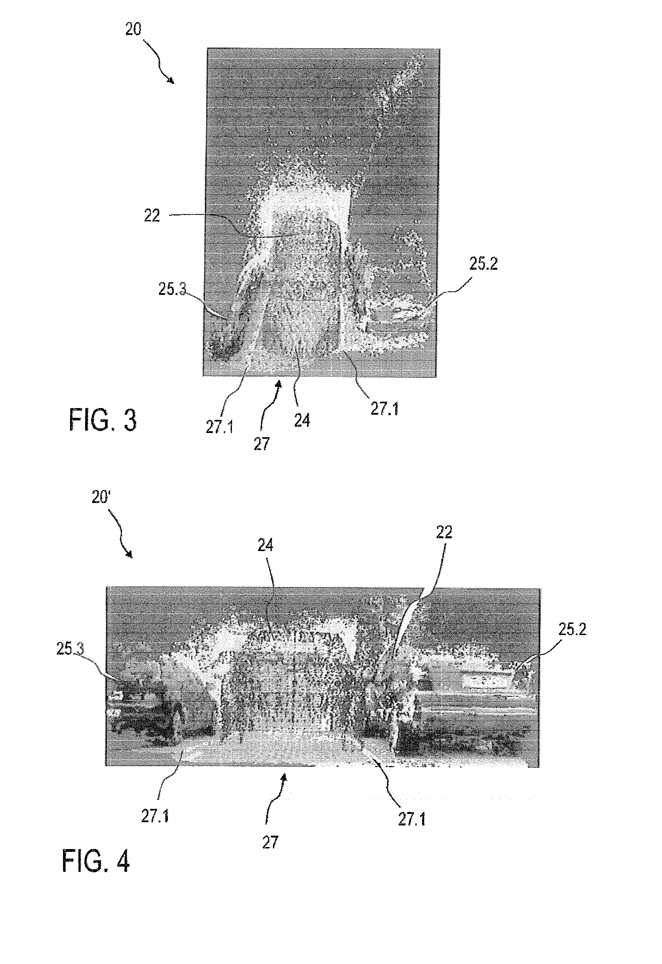

Gemäß dem in Fig. 2 dargestellten Flussdiagramm erfasst und speichert die Auswerte- und Steuereinheit 10 in einem Schritt S10 während der Bewegung des Fahrzeugs 1 über die mindestens eine Bilderfassungsvorrichtung 12.1, 12.2 Eingabebilder einer seitlichen Umgebung des Fahrzeugs 1. Die Bewegung des Fahrzeugs 1 wird in Fig. 1 durch zwei Darstellungen des Fahrzeugs 1 repräsentiert, von denen eine erste durchgezogene Darstellung des Fahrzeugs eine erste Position des Fahrzeugs zu einem ersten Zeitpunkt repräsentiert, während eine gepunktete Darstellung des Fahrzeugs 1 eine zweite Position des Fahrzeugs 1 zu einem späteren zweiten Zeitpunkt repräsentiert. Im Schritt S20 ermittelt und verfolgt die Auswerte- und Steuereinheit 10 durch Analysieren der erfassten Eingabebilder Referenzpunkte und rekonstruiert im Schritt S30 unter Verwendung der Referenzpunkte ein 3D-Modell der seitlichen Umgebung des Fahrzeugs 1 in Form einer 3D-Punktwolke 22, die beispielsweise in Fig. 3 und 4 dargestellt ist. Im Schritt S40 analysiert die Auswerte-und Steuereinheit 10 die 3D-Punktwolke 22 zur Erkennung eines freien Parkplatzes 7. Zur Ermittlung und Verfolgung von Referenzpunkten in aufeinanderfolgenden Eingabebildern, welche von unterschiedlichen Positionen aufgenommen werden, und zur Erzeugung von 3D-Punktwolken geeignete Verfahren sind aus dem Stand der Technik bekannt, so dass hier nicht im Detail darauf eingegangen wird.

Erfindungsgemäß gibt die Auswerte- und Steuereinheit 10 im Schritt S50 die 3D-Punktwolke 22 der seitlichen Umgebung des Fahrzeugs 1 als Ausgabebild 20, 20', das beispielsweise in Fig. 3 und 4 dargestellt ist, über eine optische Anzeigeeinheit 14 aus, wobei die Auswerte- und Steuereinheit 10 im Schritt S60 ein maßhaltiges 3D-Modell 24 des Fahrzeugs 1 an einer Position einer Abbildung des erkannten freien Parkplatzes 7 in das Ausgabebild 20, 20' einfügt.

Fig. 3 und 4 zeigen jeweils eine Darstellung eines Ausgabebildes 20, 20' einer 3D-Punktwolke 22 einer seitlichen Fahrzeugumgebung, wobei die Ausgabebilder 20, 20' verschiedene Blickwinkel der seitlichen Umgebung des Fahrzeugs 1 zeigen. Wie aus Fig. 3 und 4 ersichtlich ist, fügt die Auswerte- und Steuereinheit 10 zur Verbesserung der Qualität des Ausgabebilds 20, 20' Texturen 25.2, 25.3, 27, 27.1 aus den erfassten Eingabebildern in das Ausgabebild 20, 20 ' ein. Im dargestellten Ausführungsbeispiel umfassen die eingefügten Texturen 25.2, 25.3, 27, 27.1 zwei benachbart zum freien Parkplatz 7 geparkte Fahrzeuge 5.2, 5.3, eine Oberfläche des freien Parkplatzes 7 und die Begrenzungslinien 7.1 des erkannten freien Parkplatzes 7. Wie aus Fig. 3 und 4 weiter ersichtlich ist, überlagert das 3D-Modell 24 des Fahrzeugs 1 die Abbildung 27 des freien Parkplatzes 7.

Zur schnelleren Analyse der erfassten Eingabebilder speichert die Auswerte- und Steuereinheit 10 die Eingabebilder mit korrespondierenden Positionsinformationen. Die Positionsinformationen werden von einer nicht dargestellten Sensorvorrichtung bzw. Ortungsvorrichtung erfasst und zur Verfügung gestellt. Hierbei ermittelt die Auswerte- und Steuereinheit 10 aus den Positionsinformationen eine relative Positionsinformation im Bezug auf korrespondierende Eingabebilder.

Der im Ausgabebild 20, 20 ' dargestellte Blickwinkel der seitlichen Umgebung des Fahrzeugs 1 kann beispielsweise durch eine manuelle Eingabe über die Bedieneinheit 16 vom Benutzer beliebig verändert und ausgewählt werden.

Basierend auf der 3D-Punktwolke 22 der seitlichen Umgebung ermittelt die Auswerte- und Steuereinheit 10 bei einem erkannten freien Parkplatz 7 eine Einparkstrategie und gibt diese beispielsweise über die Anzeigeeinheit 14 aus. Verfügt das Fahrzeug 1 zusätzlich über ein nicht dargestelltes Einparkhilfesystem, welches in die Fahrzeugbewegung eingreifen und das Fahrzeug antreiben, lenken und bremsen kann, dann gibt die Auswerte- und Steuereinheit 10 die ermittelte Einparkstrategie bzw. die 3D-Punktwolke zur Ermittlung der Einparkstrategie an das Einparkhilfesystem aus. Das Einparkhilfesystem ermittelt basierend auf der ermittelten Einparkstrategie einen Wegplan zum Einparken des Fahrzeugs 1 und erzeugt basierend auf dem ermittelten Wegplan Steuersignale für nicht dargestellte Fahrzeugsysteme, um einen automatischen Einparkvorgang in den erkannten freien Parkplatz 7 auszuführen. Die zu beeinflussenden Fahrzeugsysteme umfassen beispielsweise ein aktives Lenksystem und/oder ein aktives Bremssystem und/oder eine Motorsteuerung.

Ausführungsformen der vorliegenden Erfindung können als Schaltung, Vorrichtung, Verfahren, Datenverarbeitungsprogramm mit Programmcodemitteln und/oder als Computerprogrammprodukt realisiert werden. Entsprechend kann die vorliegende Erfindung vollständig als Hardware und/oder als Software und/oder als Kombination aus Hardware- und/oder Softwarekomponenten ausgeführt werden. Zudem kann die vorliegende Erfindung als Computerprogrammprodukt auf einem computernutzbaren Speichermedium mit computerlesbarem Programmcode ausgeführt werden, wobei verschiedene computerlesbare Speichermedien wie Festplatten, CD-ROMs, optische oder magnetische Speicherelemente usw. benutzt werden können.

Die computernutzbaren oder computerlesbaren Medien können beispielsweise elektronische, magnetische, optische, elektromagnetische Infrarot- oder Halbleitersysteme, Vorrichtungen, Geräte oder Verbreitungsmedien umfassen. Zudem können die computerlesbaren Medien eine elektrische Verbindung mit einer oder mehreren Leitungen, eine tragbare Computerdiskette, einen Speicher mit direktem Zugriff (RAM), einen Nur-Lese-Speicher (ROM), einen löschbaren und programmierbaren Nur-Lese-Speicher (EPROM oder Flashspeicher, eine optischen Leitung und eine tragbare CD-ROM umfassen. Das computernutzbare oder das computerlesbare Medium kann sogar Papier oder ein anderes geeignetes Medium sein, auf welchem das Programm geschrieben ist, und von welchem es, beispielsweise durch einen optischen Abtastvorgang des Papiers oder des anderen Mediums elektrisch erfassbar ist, dann kompiliert, interpretiert oder falls erforderlich auf andere Weise verarbeitet und dann im Computerspeicher gespeichert werden kann.

## Patentansprüche

1. Verfahren zum Erkennen von freien Parkplätzen durch Analyse von Bilddaten, welche in einem Fahrzeug (1) von mindestens einer Bilderfassungsvorrichtung (12.1, 12.2) aufgenommen werden, mit den Schritten:
- Erfassen und Speichern von Eingabebildern einer seitlichen Umgebung des Fahrzeugs (1) während einer Bewegung des Fahrzeugs (1),
- Ermitteln und Verfolgen von Referenzpunkten durch Analysieren der erfassten Eingabebilder,
- Rekonstruieren eines 3D-Modells der seitlichen Umgebung des Fahrzeugs (1) in Form einer 3D-Punktwolke (22) unter Verwendung der Referenzpunkte,
- Analysieren der 3D-Punktwolke (22), um einen freien Parkplatz (7) zu erkennen,
**dadurch gekennzeichnet, dass**
- die 3D-Punktwolke (22) der seitlichen Umgebung des Fahrzeugs (1) als Ausgabebild (20, 20') ausgegeben wird,
- wobei ein maßhaltiges 3D-Modell (24) des Fahrzeugs (1) an einer Position einer Abbildung des erkannten freien Parkplatzes (7) in das Ausgabebild (20, 20') eingefügt wird.

2. Verfahren nach Anspruch 1,
**dadurch gekennzeichnet,**
**dass** Texturen (25.2, 25.3, 27, 27.1) aus den erfassten Eingabebildern in das Ausgabebild (20, 20') eingefügt werden.

3. Verfahren nach Anspruch 2,
**dadurch gekennzeichnet,**
**dass** die eingefügten Texturen (25.2, 25.3, 27, 27.1) mindestens ein benachbart zum freien Parkplatz (7) geparktes Fahrzeug (5.2, 5.3) und/oder eine Oberfläche des freien Parkplatzes (7) und/oder mindestens eine Begrenzungslinie (7.1) des erkannten freien Parkplatzes (7) umfassen.

4. Verfahren nach einem der vorgehenden Ansprüche 1 bis 3,
**dadurch gekennzeichnet,**
**dass** die Eingabebilder mit korrespondierenden Positionsinformationen gespeichert werden, aus welchen eine relative Positionsinformation ermittelt und zur Analyse der Eingabebilder verwendet wird.

5. Verfahren nach einem der vorherigen Ansprüche 1 bis 4,
**dadurch gekennzeichnet,**
**dass** der im Ausgabebild (20, 20') dargestellte Blickwinkel der seitlichen Umgebung des Fahrzeugs (1) beliebig veränderbar ist.

6. Verfahren nach einem der vorherigen Ansprüche 1 bis 5,
**dadurch gekennzeichnet,**
**dass** basierend auf der 3D-Punktwolke (22) der seitlichen Umgebung des Fahrzeugs (1) eine Einparkstrategie ermittelt und ausgegeben wird, wenn ein freier Parkplatz erkannt wird.

7. Verfahren nach Anspruch 6,
**dadurch gekennzeichnet,**
**dass** basierend auf der ermittelten Einparkstrategie ein Wegplan zum Einparken des Fahrzeugs ermittelt und ausgegeben wird.

8. Verfahren nach Anspruch 7,
**dadurch gekennzeichnet,**
**dass** basierend auf dem ermittelten Wegplan Steuersignale für Fahrzeugsysteme erzeugt werden, um einen automatischen Einparkvorgang in den erkannten Parkplatz auszuführen.

9. Vorrichtung zum Erkennen von freien Parkplätzen durch Analyse von Bilddaten, welche in einem Fahrzeug (1) von mindestens einer Bilderfassungsvorrichtung (12.1, 12.2) aufgenommen sind, mit einer Auswerte- und Steuereinheit (10), welche während der Bewegung des Fahrzeugs (1) über die mindestens eine Bilderfassungsvorrichtung (12.1, 12.2) Eingabebildern einer seitlichen Umgebung des Fahrzeugs (1) erfasst und speichert, wobei die Auswerte- und Steuereinheit (10) durch Analysieren der erfassten Eingabebilder Referenzpunkte ermittelt und verfolgt und unter Verwendung der Referenzpunkte ein 3D-Modell der seitlichen Umgebung des Fahrzeugs (1) in Form einer 3D-Punktwolke (22) rekonstruiert, und wobei die Auswerte-und Steuereinheit (10) zur Erkennung eines freien Parkplatzes (7) die 3D-Punktwolke (22) analysiert,
**dadurch gekennzeichnet, dass**
die Auswerte- und Steuereinheit (10) die 3D-Punktwolke (22) der seitlichen Umgebung des Fahrzeugs (1) als Ausgabebild (20, 20') über eine optische Anzeigeeinheit (14) ausgibt, wobei die Auswerte- und Steuereinheit (10) ein maßhaltiges 3D-Modell (24) des Fahrzeugs (1) an einer Position einer Abbildung des erkannten freien Parkplatzes (7) in das Ausgabebild (20, 20') einfügt.

10. Vorrichtung nach Anspruch 9,
**dadurch gekennzeichnet,**
**dass** die Auswerte- und Steuereinheit (10) Texturen (25.2, 25.3, 27, 27.1) aus den erfassten Eingabebildern in das Ausgabebild (20, 20') eingefügt, wobei die eingefügten Texturen (25.2, 25.3, 27, 27.1) mindestens ein benachbart zum freien Parkplatz (7) geparktes Fahrzeug (5.2, 5.3) und/oder eine Oberfläche des freien Parkplatzes (7) und/oder mindestens eine Begrenzungslinie (7.1) des erkannten freien Parkplatzes (7) umfassen.

11. Vorrichtung nach Anspruch 9 oder 10,
**dadurch gekennzeichnet,**
**dass** die Auswerte- und Steuereinheit (10) Eingabebilder mit korrespondierenden Positionsinformationen speichert, welche mindestens eine Sensorvorrichtung erfasst und zur Verfügung stellt, wobei die Auswerte- und Steuereinheit (10) aus den Positionsinformationen eine relative Positionsinformation im Bezug auf korrespondierend Eingabebilder ermittelt und zur Analyse der Eingabebilder verwendet.

12. Vorrichtung nach einem der vorherigen Ansprüche 9 bis 11,
**dadurch gekennzeichnet,**
**dass** der im Ausgabebild (20, 20') dargestellte Blickwinkel der seitlichen Umgebung des Fahrzeugs (1) durch eine manuelle Eingabe über eine Bedieneinheit (16) beliebig veränderbar ist.

13. Vorrichtung nach einem der vorherigen Ansprüche 9 bis 12,
**dadurch gekennzeichnet,**
**dass** die Auswerte- und Steuereinheit (10) bei einem erkannten freien Parkplatz (7) basierend auf der 3D-Punktwolke (22) der seitlichen Umgebung des Fahrzeugs (1) eine Einparkstrategie ermittelt und an die Anzeigeeinheit (14) und/oder ein Einparkhilfesystem ausgibt, wobei das Einparkhilfesystem basierend auf der ermittelten Einparkstrategie einen Wegplan zum Einparken des Fahrzeugs ermittelt und basierend auf dem ermittelten Wegplan Steuersignale für Fahrzeugsysteme erzeugt, um einen automatischen Einparkvorgang auszuführen, wobei die Fahrzeugsysteme ein aktives Lenksystem und/oder ein aktives Bremssystem und/oder eine Motorsteuerung umfassen.

14. Datenverarbeitungsprogramm mit Programmcodemitteln zur Ausführung des Verfahrens zum Erkennen von freien Parkplätzen nach einem der Ansprüche 1 bis 8 durch eine elektronische Auswerte- und Steuereinheit (10) mit mindestens einem Prozessor, wenn das Programm durch die elektronische Auswerte- und Steuereinheit (10) abgearbeitet wird.

15. Computerprogrammprodukt mit Programmcodemitteln, welche in einem computerlesbaren Medium gespeichert sind, um das Verfahren zum Erkennen von freien Parkplätzen nach einem der Ansprüche 1 bis 8 durchzuführen, wenn das Computerprogrammprodukt auf einem Prozessor einer elektronischen Auswerte- und Steuereinheit (10) abgearbeitet wird.
